# EUROPEAN PATENT SPECIFICATION

(11) **EP 3 791 849 B1**
(45) Date of publication and mention of the grant of the patent: **19.04.2023**
(21) Application number: 19196912.0
(22) Date of filing: 12.09.2019
(51) Int. Cl.: A61H 33/06, G05D 23/19

(54) **METHOD AND SYSTEM IN A SAUNA FOR IDENTIFICATION OF OBJECTS**
VERFAHREN UND SYSTEM IN EINER SAUNA ZUR IDENTIFIZIERUNG VON OBJEKTEN
PROCÉDÉ ET SYSTÈME DANS UN SAUNA POUR IDENTIFICATION D'OBJETS

(43) Date of publication of application: 17.03.2021
(73) Proprietor: Narvi Oy, 27230 Lappi (FI)
(72) Inventor: Nummela, Manu, 27600 Hinnerjoki (FI); Lähdemäki, Heimo, 20200 Turku (FI)
(74) Representative: Boco IP Oy Ab

(56) References cited:
- EP-A1- 2 272 481
- EP-A1- 3 421 027
- WO-A2-2008/092524
- JP-A- S61 122 426
- JP-A- S61 122 426

## Description

### Field of the invention

The invention is concerned with a method and a system as well as a computer program product for detection of objects on a sauna heater, and a computer program product in order to prevent fires.

### Background of the invention

When heating a sauna stove or a sauna heater, it is important to check that there are no burning materials in the vicinity for ensuring fire safety. Normally, a human being performs this action when the sauna stove is switched on.

Also, when the sauna stove is heated by a remote switch, it should in some way be checked that there are no objects or burning material, such as clothes, that could be ignited upon the rise of the temperature of the sauna stove.

There is a known method that is based on the monitor of the temperature of the steam room of the sauna by a normal temperature sensor. The steam room, however, normally warms up very slowly and the temperature sensor does not give reliable information of the overall situation. The steam room, namely, warms up even if the stove would be covered even if slower. The sensor is also normally positioned above the stove and changes on the surface of the stove can not be detected.

In another known method, an infrared sensor installed above the stove is used to detect objects on the stove upon deviations in a set temperature curve. This method is, however, not reliable either, since the conditions for the infrared radiation change by time due to erosion of the stones of the stove causing a different air circulation. Other changes of the stove also paly a role, e.g. the ambient temperature in a cottage sauna affecting the starting temperature. Thus, known temperature curves that are set in a factor or at implementation of the stove do not work in the long run.

WO2008/092524 discloses a safety method for a start-up of heating devices for saunas, thermal cabins, steam baths or the like, and to a safety device for performing said method. The safety device controls a start-up such that, if the start-up deviates from the operational stipulations, a heating device is turned off by means of a controller of the safety device. At least one temperature detection element detects the temperature during heating in order to control the controller. The controller emits a warning signal in the event of failure of the controller. Neither does this method, however, take changing conditions into consideration.

EP patent application 3 421 027 A1, which discloses a fire prevention system for a sauna, is also mentioned as prior art wherein changing conditions are not taken into consideration. Such a solution is also presented in JP S61 122426A, which comprises a switch for turning off a heater.

EP patent application 2 272 481 A1 is mentioned as general prior art for using a heater.

### Brief description of the invention

The present invention is directed to a method for detection of objects on a sauna heater according to claim 1, a system for identification of objects on a sauna heater according to claim 9, and computer program product according to claim 16.

The method of the invention for detection of objects on a sauna heater comprises the steps of construction of a normal set heat radiation curve by means of an average of several measurements over a time period and storing the heat radiation curve in a memory of a controller. The heat radiation measurements from a sauna heater are monitored over a corresponding time period by using a first sensor. The monitored heat radiation is compared to values in the normal set heat radiation curve by software in the controller. The controller switches the sauna heater off when a deviation from a normal heat radiation curve is detected, and in the absence of a deviation, updates the normal set heat radiation curve with the monitored heat radiation measurements.

The system of the invention for identification of objects on a sauna heater comprises a first sensor for monitoring heat radiation measurements from the sauna heater and a controller. The controller has a memory for storing a normal set heat radiation curve with information of an average of several measurements over a time period and for storing an updated heat radiation curve with information over a corresponding later time period. Software in the controller compares the monitored heat radiation to values in the set heat radiation curve and updates the normal set heat radiation curve with the latest heat radiation measurements. The controller has also means for switching the sauna heater off when a deviation from a normal heat radiation curve is detected.

The preferable embodiments of the invention have the characteristics of the subclaims.

The sensor preferably used in the invention is a thermopile sensor, which reacts on infrared radiation. A thermopile is an electronic device that converts thermal energy into electrical energy. It is composed of several thermocouples connected usually in series or, less commonly, in parallel. The function of a thermopile is to transfer the heat radiation emitted from the object to a voltage output. The output is in the range of tens or hundreds of millivolts. Thermopiles can be used to provide an output in response to a temperature as part of a temperature measuring device, such as the infrared thermometers.

An important aspect is that the sensor itself emits radiation, which is a function of its own temperature. Therefore, the net amount of radiation which is absorbed by the sensor is a function of the temperature difference between object and sensor. Thus, a thermopile - and any other radiation sensor - generates a signal proportional to the temperature difference between sensor and object. This makes it necessary for a remote temperature measurement not only to record the temperature rise of the absorber, but also to register the temperature of the sensor itself.

The sensor is installed above the sauna heater, also called a sauna stove, or in the ceiling so that the sensor points against the stone space of the heater. It reacts immediately to infrared radiation and can be installed together with or integrated with a normal temperature sensor or as a separate sensor. If there are obstacles between the sensor and the heater, the amount of radiation is considerably reduced compared to a situation without any obstacles or objects. The obstacles, such as different objects and clothes, can thus be detected relatively fast, after ca 1,5 - 2 minutes according to tests when enough time has passed after having switched on the heater. In such a short time, the heater is not warmed up enough to cause any fire risk.

If an obstacle is detected, the heater is set into an off state for a given set time, during which it is impossible to switch on the heater again. Another alternative is that switching the heater on again requires an aknowledgement form a central controller.

The sensor is in the first hand meant to be used in the up-warming phase of the heater but can also be used during the using phase of the sauna when it already is warmed up.

If there is a sudden fall of the heat radiation, it is probable that some obstacle has fallen on the heater, whereby the heater should be switched off or at least the situation should be checked. It is for example quite common that washed clothes that have been hung up for drying fall down.

The construction of a normal set heat radiation curve can e.g. be performed by warming up the heater for a couple of times, for example five times, to a temperature of preferably at least 60°C, in normal conditions and by constructing a graph or curve of the radiation as a function of time. Due to the fact that there might be variations in the radiation at a given time point between the different measurements, an average radiation amount for that time point is calculated and used in the curve.

When a curve for the radiation by means of an average of several measurements over a time period has been constructed, the heat radiation curve is stored in a memory of a controller. The controller compares the existing radiation intensity to the radiation in the curve at a given time point and makes a decision, on the basis of a difference, whether there are obstacles on the heater or not.

If the controller draws the conclusion that there are obstacles, it switches off the heater. A threshold for such a difference in radiation can be set. The normal amount of radiation will gradually change over time and therefore there will be a normal difference in radiation compared to the constructed curve. Therefore, a little deviation between the actual radiation and a normal radiation is acceptable for a give point of time.

When the heating of the heater proceeds in a way that is in accordance with the set average curve within acceptable ranges, the measured radiation values are used to update the normal set heat radiation curve. These values are added in a table for calculation of average values and the oldest values are removed. Then a new curve is based on an average of values, wherein the oldest values are left out and the newest measured values are used instead.

The above functions can be performed with a software program product in the controller. It has to be noted that the operating values of the sensor also depend on the temperature of the sensor itself, which preferably is taken into consideration in the program.

The software program product in the controller preferably stores both the heating of the heater as measured with a normal temperature sensor and stores the radiation intensity in the form of electric energy in volts as measured and transferred with the infrared sensor at least during the heating phase of that heating.

The normal set heat radiation curve is thus always based on the newest heating successful measurements, such as the five latest measurements, whereby the values can be trusted in the detection of obstacles on the heater. The system and method of the invention is, thanks to its adaptivity, suitable for different types of heaters and different types of surroundings due to changed settings and stones. The stones might e.g. rupture and thus cause a change in the radiation environment in the stone space.

Preferably, a separate overheat protection means of a known type is used besides the thermopile sensor, since the thermopile sensor can not directly be used for overheat protection since it is used to measure heat radiation on the surface of the heater. An overheat protection means typically monitors the warmest place of a sauna steam room. if the temperature exceeds an allowable threshold, the overheat protection means switches off the heater. Usually, the warmest place is directly above the heater in the ceiling.

Furthermore, the overheat protection means is directly connected to control the relay of the power input, and therefore, its signal is not processed by a program as the temperature adjustment. Of safety reasons, it is instead performed by direct electric control.

### Brief description of the figures

In the following the invention will be described in greater detail, in connection with preferred embodiments, with reference to the attached drawings, in which
Figure 1 illustrates a flow scheme of the method of the invention for detection of objects on a sauna heater
Figure 2 illustrates an architecture view of a system of the invention for detection of objects on a sauna heater

### Detailed description of some embodiments

In the following, features of the invention will be described with a simple example of an architecture in which various embodiments of the invention may be implemented. Only elements relevant for illustrating the embodiments are described in detail.

The present invention is directed to a system for detection of objects in a sauna heater. Especially if the sauna may be switched on remotely e.g. by an application in a smartphone or pad, or remotely from a control panel not in the immediate vicinity of the sauna heater itself, the user might not be aware of one or more objects that may have been left on or too close to the sauna heater. If for example a towel or some plastic vessel is left carelessly on the sauna heater or has been hanged over the heater to dry, it will rapidly catch fire if the sauna heater is switched on. Even if the temperature and rise of temperature of the sauna is monitored with a temperature sensor, the temperature of the sauna rises so slowly that any deviations from a normal situation are so small that they might not be observed before the object catches fire.

In the present invention, the heat radiation of the sauna heater is detected with a sensor which detects heat radiation. For this purpose, an infrared sensor may be used. The sensor is situated above the sauna heater on the wall or in the ceiling in such a manner that the sensor is directed toward the stones of the sauna heater. The sensor may be integrated with a normal heat sensor of the sauna or may be a separate device. The sensor reacts immediately to any heat radiation. In case there are any obstacles between the sauna heater and the sensor, such as on object on the heater, the amount of heat radiation from the sauna heater is substantially less than in a normal case with nothing blocking the heat radiation. In this manner, any objects or the like may be detected relatively fast, in just a matter of minutes. Even 5 minutes or less from switching on the sauna heater or in some cases as fast as 1,5-2 minutes. In this time, the heater will not be hot enough to cause a fire even if blocked by an object.

If an object or the like is detected and the sauna heater is turned off, the heater enters a state where it cannot be switched on again. According to one embodiment of the invention, the heater may be switched on again after a period of time, for example 15 - 30 minutes or an hour. According to another embodiment, the sauna heater may not be switched on again until the user has reset the sauna heater locally. This may e.g. be done by pressing a button at the sauna heater itself or by giving of a command to the control logics of the sauna heater.

According to a preferred embodiment, the heat radiation sensor can be utilized at any time when the sauna heater is warm, not just at the beginning of the heating process. If a sudden drop of heat radiation is detected while the heating elements of the sauna heater are on, or still warm, this is likely due to an object falling on the sauna heater and blocking the heater. In this case, the heater may also be switched off.

According to another embodiment of the invention, the heat radiation sensor can be used also when the sauna is already heated but when the heating elements are already turned off. In this case, an alarm is used to alert the user that something is blocking the sauna heater which might cause a fire.

The control logic of the sauna heater may comprise a normal set heat radiation curve specific for the sauna heater in question. When the sauna heater is switched on, the heat radiation from the sauna heater is detected and monitored. If the radiation of the sauna heater does not comply with the set heat radiation curve, i.e. does not rise as fast as the set curve, the sauna heater is switched off by the control logic of the sauna heater.

According to an alternative embodiment, the heat radiation may be measured at certain points, i.e. at set times from the point in time when the sauna heater has been switched on. If at some point in time the heat radiation is below a set limit, the sauna heater is switched off. Also, if the heat radiation from the sauna heater during the time the sauna is heated or the heater is on, suddenly drops the sauna heater is switched off.

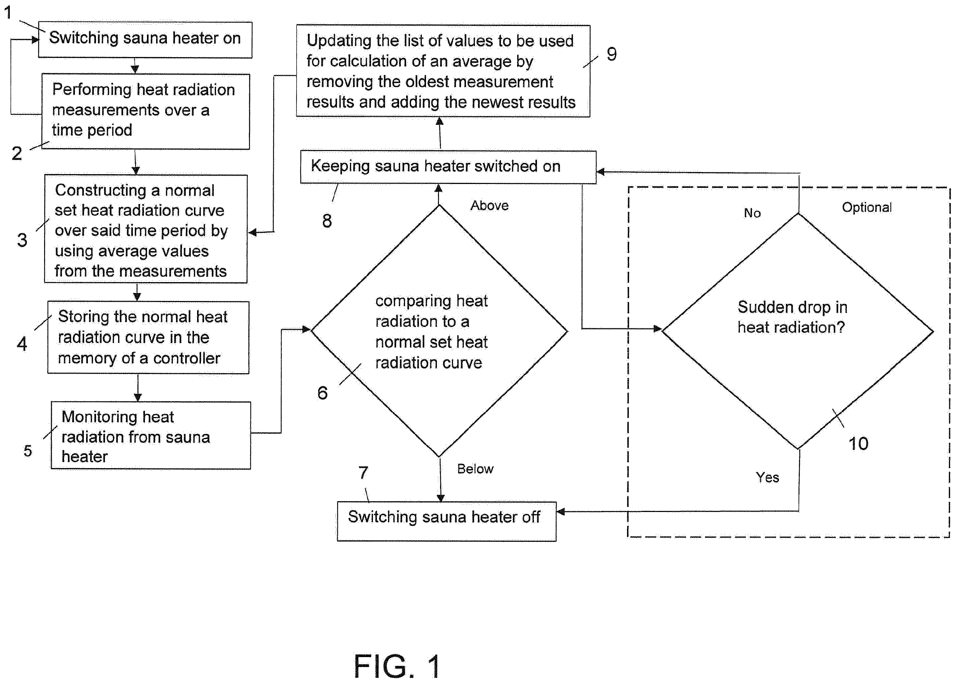

It is pointed out that, the heat radiation curve to which the radiation is compared in the invention has been constructed in accordance with an updated list of values in a way described more in detail below according to the steps of figure 1.

According to a preferred embodiment, a thermopile-infrared sensor may be used. In this case, the sensor measures the difference in heat radiation between itself and a visible object, such as the sauna heater. The sensor comprises a thermocouple, which generates an output voltage proportional to a local temperature difference between a target, in this case the sauna heater or the radiation from the sauna heater, and a reference. The reference is the radiation caused by the ambient temperature. Due to this, the thermopile-sensor may also include a Negative Temperature Coefficient (NTC) sensor, for determining the absolute temperature of the sensor.

Alternatively, the temperature of the sensor is determined by the same sensor that is used for determining the temperature of the sauna itself. Preferably the temperature sensor is then placed in the same casing as the thermopile sensor in order to give a reading which is as accurate as possible. When measuring the heat radiation, the temperature may thus also always be measured. The output voltage is to some extent affected by the temperature of the sensor itself, but generally the impact is relatively small, about -0,1 %/°Celsius. In other words, when the temperature rises the generated voltage decreases, but only very slightly.

Figure 1 describes the method as a flow diagram. First, a normal set heat radiation curve has to be constructed. For that purpose, the sauna heater is switched on in step 1.

The measurements of the intensity of the heat radiation from the sauna heater is then started to be continuously performed by means of a heat radiation sensor over a time period, which is referenced as step 2.

Steps 1 and 2 are then repeated a couple of times, such as five times.

A normal set heat radiation curve is then constructed in step 3 by means of an average of the measurements of step 2 over said time period, and the constructed heat radiation curve is stored in step 4 in a memory of a controller together with a list of the measurement results used for calculating the average curve. The sauna may be switched off for the next use if not used immediately.

For use, the sauna heater is switched on again, if necessary, and in step 5, the heat radiation from a sauna heater is monitored over a corresponding time period by using the heat radiation sensor.

In step 6, e.g. when a time for detection has been reached, the monitored heat radiation is compared to values in the set normal heat radiation curve by software in the controller. Instead of a continuous monitoring, a measurement of the heat radiation is performed when a time for detection has been reached and the measured value is compared to a normal value at a corresponding point of time.

If the heat radiation is below the normal set threshold value or radiation rise curve, the sauna heater is switched off in step 7. If the heat radiation is above a set threshold value or radiation rise curve, the normal operation of the sauna heater controlled by the thermostat will continue in step 8 by keeping the sauna heater switched on.

The measured values of the heat radiation monitored are then updated in step 9 for calculation of a new average by removing the oldest measurement results and adding the newest results.

Step 3 is then repeated for construction of a new updated normal set heat radiation curve by using the updated values.

According to one embodiment, if a sudden drop in heat radiation is detected in an optional step 10, the sauna heater will be switched off as in step 7. But if no such drop is detected, the sauna heater is kept on as in step 8.

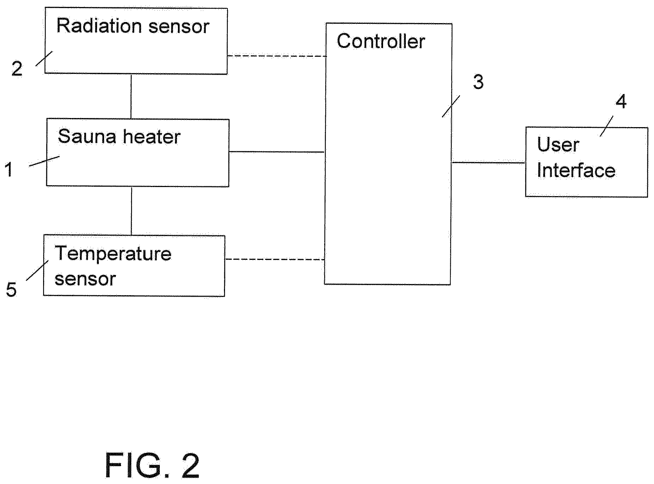

Figure 2 illustrates an architecture view of a system of the invention for detection of objects on a sauna heater.

The system comprises a sauna heater 1, a radiation sensor 2, and a controller 3, a user interface 4, and an optional temperature sensor 5.

In figure 2, the sensor 2 is connected to the sauna heater 1 but can alternatively also be connected to the controller 3 as illustrated by a dotted line. The control logics may be comprised in the sauna heater 2 or be comprised in a separate control unit, such a sin the controller 3 from which the sauna heater 2 may be controlled or be a separate protection device that can be used in an existing sauna and sauna heater.

In case the control logics is comprised in the sauna heater 1, the control logics may be controlled by traditional control knobs on the heater. Alternatively, the means for controlling the control logics may be a remote panel or the like or any other suitable user interface 4. The user interface 4 for controlling the sauna heater 1 may be a mobile phone, a tablet, or the like.

The optional temperature sensor 5 can be connected to the sauna heater 1 or to the controller 3 as shown with a dotted line.

It is apparent to a person skilled in the art that as technology advances, the basic idea of the invention can be implemented in various ways. The invention and its embodiments are therefore not restricted to the above examples, but they may vary within the scope of the claims.

## Claims

1. Method for detection of objects on a sauna heater (1), wherein the method comprises the steps of
a) construction of a normal set heat radiation curve by means of an average of several measurements over a time period, and storing the heat radiation curve in a memory of a controller (3),
b) monitoring the heat radiation measurements from a sauna heater (1) over a corresponding time period by using a first sensor (2),
c) comparing the monitored heat radiation to values in the normal set heat radiation curve by software in the controller (3),
d) the controller (3) switching the sauna heater (1) off when a deviation from a normal heat radiation curve is detected, and in the absence of a deviation, updating the normal set heat radiation curve with the monitored heat radiation measurements.

2. Method of claim 1, wherein the results of the monitored heat radiation measurements from a sauna heater (1) are stored in the memory of the controller (3).

3. Method of claim 1 or 2, wherein the monitoring of the heat radiation measurements from a sauna heater (1) is performed at one or more points of time for detection.

4. Method of any of claims 1 - 3, wherein in step d), the sauna heater (1) is switched off, when the deviation from a normal heat radiation curve consists in a value below a value at a corresponding point of time in the normal set heat radiation curve or below a threshold value of heat radiation.

5. Method of any of claims 1 - 3, wherein in step d), the sauna heater (1) is kept switched on, when the deviation from a normal heat radiation curve consists in a value corresponding to or above a value of heat radiation at a corresponding point of time in the normal set heat radiation curve or above a threshold value of heat radiation.

6. Method of any of claims 1 - 5, further comprising that the temperature of the first sensor (2) itself is taken into consideration in the operating values of the first sensor (2) by including a second sensor (5) for measuring the temperature of the first sensor (2).

7. Method of any of claims 1 - 6, wherein said time period expands the heating period of the sauna heater (1), the heated period of the sauna heater (1) and/or the cooling period of the sauna heater (1) after it has been switched off.

8. Method of any of claims 1 - 7, wherein said updating is performed on the basis of said earlier average values of measurements so that the earliest measurement is omitted and the latest measurement is added so as to form a new average.

9. System for identification of objects on a sauna heater (1), wherein it comprises
a first sensor (2) for monitoring heat radiation measurements from the sauna heater (1),
a controller (3) with
a memory for storing a normal set heat radiation curve with information of an average of several measurements over a time period and for storing an updated heat radiation curve with information over a corresponding later time period,
software for comparing the monitored heat radiation to values in the set heat radiation curve, and for updating the normal set heat radiation curve with the latest heat radiation measurements, and
means for switching the sauna heater (1) off when a deviation from a normal heat radiation curve is detected.

10. System of claim 9, wherein the first sensor (2) is an infrared radiation sensor, such as a thermopile-infrared sensor.

11. System of claim 10, further comprising a second sensor (5) for taking the temperature of the first sensor (2) itself into consideration.

12. System of claim 11, wherein the second sensor (5) is included in the first sensor (2) and is a Negative Temperature Coefficient (NTC) sensor for determining the absolute temperature of the sensor.

13. System of claim 12, wherein the second sensor (5) is a temperature sensor.

14. System of any of claims 12 - 13, wherein the first sensor (2) and second sensor (5) are integrated with eachother or separated from each other.

15. System of any of claims 9 - 14, wherein the controller (3) is integrated with or separated from the sauna heater (1).

16. Computer program product with software to be used in the method of any of claims 1 - 8 or in the system of any of claims 9 - 15, whereby the software comprising instructions to cause a processor in the controller (3) of the system to execute the steps of the method of any of claims 1 - 8 on the system of any of claims 9-15:
comparing the monitored heat radiation to values in the set heat radiation curve, instructing the controller (3) to switch the sauna heater (1) off when a deviation from a normal heat radiation curve is detected, or in the absence of a deviation, updating the normal set heat radiation curve with the latest heat radiation measurements stored.

## Patentansprüche

1. Verfahren zur Erkennung von Objekten auf einer Saunaheizung (1), wobei das Verfahren die Schritte umfasst:
a) Aufbauen einer normalen Wärmestrahlungssollkurve mit Hilfe eines Mittelwerts von mehreren Messungen über eine Zeitperiode und Speichern der Wärmestrahlungskurve in einem Speicher eines Steuergeräts (3),
b) Überwachen der Wärmestrahlungsmessungen aus einer Saunaheizung (1) über eine entsprechende Zeitperiode mit Hilfe eines ersten Sensors (2),
c) Vergleichen der überwachten Wärmestrahlung mit Werten in der normalen Wärmestrahlungssollkurve über eine Software im Steuergerät (3),
d) Ausschalten der Saunaheizung (1) durch das Steuergerät (3), wenn eine Abweichung von einer normalen Wärmestrahlungskurve erkannt wird, und bei Nichtvorliegen einer Abweichung Aktualisieren der normalen Wärmestrahlungssollkurve mit den überwachten Wärmestrahlungsmessungen.

2. Verfahren nach Anspruch 1, wobei die Ergebnisse der überwachten Wärmestrahlungsmessungen aus einer Saunaheizung (1) im Speicher des Steuergeräts (3) gespeichert werden.

3. Verfahren nach Anspruch 1 oder 2, wobei das Überwachen der Wärmestrahlungsmessungen aus einer Saunaheizung (1) für die Erkennung an einem oder mehreren Zeitpunkten ausgeführt wird.

4. Verfahren nach einem der Ansprüche 1 bis 3, wobei in Schritt d) die Saunaheizung (1) ausgeschaltet wird, wenn die Abweichung von einer normalen Wärmestrahlungskurve in einem Wert besteht, der kleiner als ein Wert an einem entsprechenden Zeitpunkt in der normalen Wärmestrahlungssollkurve oder kleiner als ein Wärmestrahlungsschwellenwert ist.

5. Verfahren nach einem der Ansprüche 1 bis 3, wobei in Schritt d) die Saunaheizung (1) ausgeschaltet bleibt, wenn die Abweichung von einer normalen Wärmestrahlungskurve in einem Wert besteht, der gleich oder größer als ein Wärmestrahlungswert an einem entsprechenden Zeitpunkt in der normalen Wärmestrahlungssollkurve oder größer als ein Wärmestrahlungsschwellenwert ist.

6. Verfahren nach einem der Ansprüche 1 bis 5, ferner umfassend den Schritt, dass die Eigentemperatur des ersten Sensors (2) in den Betriebswerten des ersten Sensors (2) berücksichtigt wird, indem ein zweiter Sensor (5) für die Messung der Temperatur des ersten Sensors (2) enthalten ist.

7. Verfahren nach einem der Ansprüche 1 bis 6, wobei die Zeitperiode die Aufheizperiode der Saunaheizung (1), die beheizte Periode der Saunaheizung (1) und/oder die Abkühlperiode der Saunaheizung (1) nach erfolgter Ausschaltung erweitert.

8. Verfahren nach einem der Ansprüche 1 bis 7, wobei die Aktualisierung auf Grundlage der früheren Mittelwerte von Messungen dergestalt ausgeführt wird, dass die früheste Messung weggelassen und die letzte Messung hinzugefügt wird, um so einen neuen Mittelwert zu bilden.

9. System zur Identifikation von Objekten auf einer Saunaheizung (1), wobei es umfasst:
einen ersten Sensor (2) zum Überwachen von Wärmestrahlungsmessungen aus der Saunaheizung (1),
ein Steuergerät (3) mit
einem Speicher zum Speichern einer normalen Wärmestrahlungssollkurve mit Informationen über einen Mittelwert von mehreren Messungen über eine Zeitperiode und zum Speichern einer aktualisierten Wärmestrahlungskurve mit Informationen über eine entsprechende spätere Zeitperiode,
Software zum Vergleichen der überwachten Wärmestrahlung mit Werten in der Wärmestrahlungssollkurve und zum Aktualisieren der normalen Wärmestrahlungssollkurve mit den letzten Wärmestrahlungsmessungen, und
Mittel zum Ausschalten der Saunaheizung (1), wenn eine Abweichung von einer normalen Wärmestrahlungskurve erkannt wird.

10. System nach Anspruch 9, wobei der erste Sensor (2) ein Infrarot-Strahlungssensor, wie ein Infrarot-Thermosäulensensor, ist.

11. System nach Anspruch 10, ferner umfassend einen zweiten Sensor (5) zur Berücksichtigung der Eigentemperatur des ersten Sensors (2).

12. System nach Anspruch 11, wobei der zweite Sensor (5) im ersten Sensor (2) enthalten ist und ein Sensor mit negativem Temperaturkoeffizienten (NTC-Sensor) zum Bestimmen der absoluten Temperatur des Sensors ist.

13. System nach Anspruch 12, wobei der zweite Sensor (5) ein Temperatursensor ist.

14. System nach einem der Ansprüche 12 bis 13, wobei der erste Sensor (2) und der zweite Sensor (5) ineinander integriert oder voneinander getrennt sind.

15. System nach einem der Ansprüche 9 bis 14, wobei das Steuergerät (3) in die Saunaheizung (1) integriert oder von dieser getrennt ist.

16. Computerprogrammprodukt mit Software zur Verwendung im Verfahren nach einem der Ansprüche 1 bis 8 oder im System nach einem der Ansprüche 9 bis 15, wobei die Software Anweisungen umfasst, um einen Prozessor im Steuergerät (3) des Systems zu veranlassen, die Schritte des Verfahrens nach einem der Ansprüche 1 bis 8 auf einem System nach einem der Ansprüche 9 bis 15 auszuführen:
Vergleichen der überwachten Wärmestrahlung mit Werten in der Wärmestrahlungssollkurve,
Anweisen des Steuergeräts (3) zum Ausschalten der Saunaheizung (1), wenn eine Abweichung von einer normalen Wärmestrahlungskurve erkannt wird, oder bei Nichtvorliegen einer Abweichung zum Aktualisieren der normalen Wärmestrahlungssollkurve mit den letzten gespeicherten Wärmestrahlungsmessungen.

## Revendications

1. Procédé pour détecter des objets sur un chauffe-sauna (1), dans lequel le procédé comprend les étapes consistant à
a) construire une courbe de rayonnement thermique définie normale à l'aide d'une moyenne de plusieurs mesures sur une période de temps et enregistrer la courbe de rayonnement thermique dans une mémoire d'un contrôleur (3),
b) surveiller les mesures de rayonnement thermique en provenance d'un chauffe-sauna (1) sur une période de temps correspondante à l'aide d'un premier capteur (2),
c) comparer le rayonnement thermique surveillé à des valeurs dans la courbe de rayonnement thermique définie normale à l'aide d'un logiciel dans le contrôleur (3),
d) mettre à l'arrêt le chauffe-sauna (1) par le contrôleur (3) lorsqu'un écart par rapport à une courbe de rayonnement thermique normale est détecté et, en cas d'absence d'écart, actualiser la courbe de rayonnement thermique définie normale avec les mesures de rayonnement thermique surveillées.

2. Procédé selon la revendication 1, dans lequel les résultats des mesures de rayonnement thermique surveillées en provenance d'un chauffe-sauna (1) sont enregistrés dans la mémoire du contrôleur (3).

3. Procédé selon la revendication 1 ou 2, dans lequel la surveillance des mesures de rayonnement thermique en provenance d'un chauffe-sauna (1) est effectuée à un ou plusieurs moments pour la détection.

4. Procédé selon l'une des revendications 1 à 3, dans lequel, dans l'étape d), le chauffe-sauna (1) est mis à l'arrêt lorsque l'écart par rapport à une courbe de rayonnement thermique normale consiste en une valeur inférieure à une valeur en un moment correspondant dans la courbe de rayonnement thermique définie normale ou inférieure à une valeur de seuil de rayonnement thermique.

5. Procédé selon l'une des revendications 1 à 3, dans lequel, dans l'étape d), le chauffe-sauna (1) est laissé à l'arrêt lorsque l'écart par rapport à une courbe de rayonnement thermique normale consiste en une valeur égale ou supérieure à une valeur de rayonnement thermique en un moment correspondant dans la courbe de rayonnement thermique définie normale ou supérieure à une valeur de seuil de rayonnement thermique.

6. Procédé selon l'une des revendications 1 à 5, comprenant également l'étape consistant à prendre en compte la température propre du premier capteur (2) dans les valeurs de fonctionnement du premier capteur (2) en incluant un deuxième capteur (5) pour mesurer la température du premier capteur (2).

7. Procédé selon l'une des revendications 1 à 6, dans lequel ladite période de temps prolonge la période de chauffe du chauffe-sauna (1), la période chauffée du chauffe-sauna (1) et/ou la période de refroidissement du chauffe-sauna (1) après qu'il a été mis à l'arrêt.

8. Procédé selon l'une des revendications 1 à 7, dans lequel l'actualisation est effectuée sur la base desdites moyennes de mesures antérieures de telle façon que la mesure la plus ancienne soit supprimée et la mesure la plus récente soit rajoutée afin de former une nouvelle moyenne.

9. Système d'identification d'objets sur un chauffe-sauna (1), dans lequel il comprend :
un premier capteur (2) pour surveiller les mesures de rayonnement thermique en provenance du chauffe-sauna (1),
un contrôleur (3) avec
une mémoire pour enregistrer une courbe de rayonnement thermique définie normale avec des informations d'une moyenne de plusieurs mesures sur une période de temps et pour enregistrer une courbe de rayonnement thermique actualisée avec des informations sur une période de temps ultérieure correspondante,
un logiciel pour comparer le rayonnement thermique surveillé à des valeurs dans la courbe de rayonnement thermique définie et pour actualiser la courbe de rayonnement thermique définie normale avec les mesures de rayonnement thermique les plus récentes, et
un moyen pour mettre à l'arrêt le chauffe-sauna (1) lorsqu'un écart par rapport à une courbe de rayonnement thermique normale est détecté.

10. Système selon la revendication 9, dans lequel le premier capteur (2) est un capteur de rayonnement infrarouge tel qu'un capteur infrarouge thermopile.

11. Système selon la revendication 10, comprenant également un deuxième capteur (5) pour prendre en compte la température propre du premier capteur (2).

12. Système selon la revendication 11, dans lequel le deuxième capteur (5) est compris dans le premier capteur (2) et est un capteur à coefficient de température négatif (NTC) pour déterminer la température absolue du capteur.

13. Système selon la revendication 12, dans lequel le deuxième capteur (5) est un capteur de température.

14. Système selon l'une des revendications 12 à 13, dans lequel le premier capteur (2) et le deuxième capteur (5) sont intégrés l'un avec l'autre ou séparés l'un de l'autre.

15. Système selon l'une des revendications 9 à 14, dans lequel le contrôleur (3) est intégré au ou séparé du chauffe-sauna (1).

16. Produit de programme informatique avec un logiciel à utiliser dans le procédé selon l'une des revendications 1 à 8 ou dans le système selon l'une des revendications 9 à 15, ledit logiciel comprenant des instructions pour amener un processeur dans le contrôleur (3) du système à exécuter les étapes du procédé selon l'une des revendications 1 à 8 sur le système selon l'une des revendications 9 à 15 :
comparer le rayonnement thermique surveillé à des valeurs dans la courbe de rayonnement thermique définie,
instruire le contrôleur (3) à mettre à l'arrêt le chauffe-sauna (1) lorsqu'un écart par rapport à une courbe de rayonnement thermique normale est détecté ou, en cas d'absence d'écart, actualiser la courbe de rayonnement thermique définie normale avec les mesures de rayonnement thermique enregistrées les plus récentes.
